# EUROPEAN PATENT SPECIFICATION

(11) **EP 4 256 978 B1**
(45) Date of publication and mention of the grant of the patent: **25.12.2024**
(21) Application number: 23165201.7
(22) Date of filing: 29.03.2023
(51) Int. Cl.: A23N 12/02, A23N 7/02, A23N 12/08

(54) **DEVICE FOR TREATING VEGETABLES**
VORRICHTUNG ZUR BEHANDLUNG VON GEMÜSE
DISPOSITIF DE TRAITEMENT DE LÉGUMES

(30) Priority: 08.04.2022 NL 2031536
(43) Date of publication of application: 11.10.2023
(73) Proprietor: Sormac B.V., 5916 PN Venlo (NL)
(72) Inventor: HAFFMANS, Hubertus Ernest Ferdinand Marie, Venlo (NL); THIJSSEN, Jeroen Jozef Geertrudis, Venlo (NL)
(74) Representative: Algemeen Octrooi- en Merkenbureau B.V.

(56) References cited:
- EP-A1- 1 446 026
- WO-A1-2020/222008
- DE-U1- 202015 004 394
- KR-A- 20160 091 122
- KR-B1- 101 352 613

## Description

The invention relates to a device for treating vegetables, wherein the device is provided with a drum rotatable about an axis of rotation in order to treat the vegetables in the drum by means of a rotating movement, and with at least one drive and/or suspension mechanism comprising at least one belt which is at least partly fitted around the drum in order to drive the drum in a rotating manner and/or to suspend the drum. The invention furthermore relates to the use of a device as described in this document for treating vegetables in the drum, such as for example peeling, washing or drying of vegetables.

Such a device is known from EP 1 446 026. For correct operation of the known device, the belt tension of the belts of the drive and suspension mechanism which are used therein and fitted around the drum are important. An incorrect belt tension may lead to slippage of the belt drive of the drum and/or undesirable deflections of the drum while the drum is being rotatably driven. In this case, a known measurement of the belt tension is a manual measurement to check the belt tension, in which case the measurement requires an operator. It is known, for example with a device which is out of action, to measure the force by means of tools which are required to depress the belt over a certain distance in order to determine the belt tension. Measuring the belt tension in the known manner is therefore relatively complicated, labour-intensive and consequently time-consuming.

It is therefore an object of the present invention to provide an improved device and/or to provide a device by means of which the belt tension can be measured in a relatively simple manner within a relatively short space of time.

At least one of these objectives is achieved by means of the device as claimed in Claim 1.

The vegetable-treating device is provided with a drum rotatable about an axis of rotation in order to treat the vegetables in the drum by means of a rotating movement, and with at least one drive and/or suspension mechanism comprising at least one belt which is at least partly fitted around the drum in order to drive the drum in a rotating manner and/or to suspend the drum. The at least one drive and/or suspension mechanism is provided with at least one tensioning mechanism by means of which the belt tension of the at least one belt can be varied, wherein the at least one drive and/or suspension mechanism is provided with a belt-tension meter.

By means of the belt-tension meter which is provided in the drive and/or suspension mechanism, the belt tension can be determined in a relatively simple manner without a measuring operation having to be performed on the belt itself. By means of the belt-tension meter, measuring the belt tension can be performed relatively quickly, without the need for external tools and even without an operator. This measurement of the belt tension which can be performed relatively quickly even makes it possible to measure the belt tension relatively often at short intervals without causing a reduction in production capacity, and to only emit a signal in case of an undesirable belt tension. As a result thereof, the risk of treating vegetables by means of a device with an undesirable belt tension can be drastically reduced and can even be practically ruled out. On the basis of the measurement of the belt tension, the belt tension can be adjusted to the desired/correct belt tension for performing the treatment of the vegetables by means of the drum, that is to say by means of the correct belt tension, the risk of the drive belt slipping can be reduced by means of the belt which is at least partly fitted around the outer circumference of the drum, and may possibly even be ruled out and/or the risk of excessive radial and/or axial deflections of the drum may be reduced or even ruled out. In addition, the belt-tension meter in the drive and/or suspension mechanism makes it possible to reduce the risk of a measurement being performed incorrectly by an operator and of an incorrect adjustment of the belt tension based thereon. In other words, the measurement may be performed without human intervention by means of the belt-tension meter.

In one aspect, the belt tension can be determined using the belt tension meter by measuring a variable in the drive and/or suspension mechanism which is correlatable with the belt tension. Such a belt tension meter may perform an indirect belt tension measurement in the drive and/or suspension mechanism, which is constructionally relatively simple and therefore inexpensive to achieve, in order to thus determine the belt tension relatively accurately and subsequently adjust it to the correct/desired belt tension. In particular, the belt tension meter may be provided in the tensioning mechanism of the drive and/or suspension mechanism in order to perform an indirect belt tension measurement.

In a further aspect, the belt tension meter comprises a torque meter, a load cell or a strain gauge. In this way, it is possible to automatically convert the measured force, torque and/or deformation in the drive and/or suspension mechanism into an electrical signal which corresponds to a belt tension in the belt. Such an electrical signal may then be used, for example, in order to display the belt tension to an operator, for example with respect to a desired belt tension, for manual adjustment of the belt tension.

In another aspect, the tensioning mechanism is configured to automatically adjust the belt tension to a desired belt tension on the basis of the actual belt tension measured by means of the belt tension meter. In this embodiment, it is not only possible to measure the belt tension without involving an operator, but it is also possible to adjust it without involving an operator. It is known that manual adjustment of the belt tension requires a relatively large amount of experience from the operator in order to achieve correct adjustment of the belt tension on the basis of a measurement. By using the tensioning mechanism to automatically adjust the belt tension to a desired setting on the basis of the actual belt tension measured by means of the belt tension meter, it is possible to rule out the risk of human error in measuring and adjusting the belt tension. If an operator does not perform the adjustment of the belt tension correctly or does not even perform it at all, this may, independently from the measurement, result in undesirable slippage of the drive by means of the belt and/or undesirable deflections of the drum. In addition, the automatic adjustment to a desired belt tension can be performed very quickly.

The drive and/or suspension mechanism may be provided with a pulley, in which case the tensioning mechanism may comprise a pulley displacement member. By means of a displacement of the pulley using the pulley displacement member, the belt tension in the at least one belt can be varied, with the pulley displacement member or the pulley being provided with the belt tension meter. From a constructional point of view, incorporating the belt tension meter in a pulley displacement member or a pulley can be achieved relatively simply. In addition, it is possible to measure the belt tension relatively accurately and quickly in this way and to use it to adjust the belt tension.

In one aspect, the at least one drive and/or suspension mechanism is provided with two further belts, with each belt comprising a pulley, preferably at least one of the three belts can be driven by means of a motor.

Such a drive and/or suspension mechanism ensures that the drum can be rotatably driven in order to treat the vegetables in the drum and/or that the drum is suspended by means of the belts. An incorrect belt tension in such a drive and/or suspension mechanism in combination with an imbalance in the drum or an incorrect distribution of the vegetables therein may result in a greater degree of deflection which may even damage the device, in other words, in a mechanism in which the drum is suspended from belts, an incorrect belt tension in the device may lead to a relatively large degree of deflection.

In a further aspect, the device comprises at least one stationary frame in which the drum is suspended in an opening of the stationary frame by means of the at least one drive and/or suspension mechanism. With such a device, the belts have to be tensioned for correct operation of the device in such a way that the drum is suspended concentrically in the opening of the stationary frame. With this concentric arrangement, the distance between the outer circumference of the drum and the opening is virtually the same everywhere. This distance is important in order to avoid contact and the distance is used to allow for any occurring deflections during operation, for example due to an uneven distribution of the vegetables to be treated in the drum. The opening, that is to say a space in the stationary frame which is not filled with components of the stationary frame, may be formed by a housing of the stationary frame which is at least largely situated around the drum. In the case of a concentric arrangement, the distance between the housing and outer circumference of the drum is substantially the same everywhere.

The device may be provided with at least one sensor mechanism, for example comprising one or two sensors, in order to determine the concentric position of the drum in the opening. The sensor mechanism is, for example, an ultrasonic sensor mechanism comprising at least one ultrasonic sensor. The sensor mechanism may, for example, communicate with an output unit in order to output a perceivable signal in case the drum is no longer suspended concentrically. The sensor mechanism may further be communicatively connected to a display for displaying the concentric position of the drum. On the basis thereof, an operator can adjust the tension in at least one of the belts by means of the tensioning mechanism. As an alternative or in addition to the display, the sensor mechanism may be communicatively connected to a controller for automatically adjusting the belt tension of the at least one belt fitted around the drum, and thus the concentric position of the drum, by means of the tensioning mechanism. The controller may form part of the device or may be an external controller which can in any case be communicatively connected to the device. The automatic adjustment of the belt tension in order to suspend the drum concentrically in the opening of the frame can be carried out relatively quickly and accurately and rules out human error during adjustment. If the sensor mechanism is also communicatively connected to the display during the automatic adjustment procedure, the automatic adjustment procedure can be followed on the display.

In another aspect, the axis of rotation of the drum encloses an angle with the horizontal of between 0 and 60 degrees. With a device in the form of a centrifuge for drying vegetables in the drum or with a device for washing vegetables, a force in the axial direction of the drum will occur if the drum is arranged at an angle greater than zero degrees, due to the force of gravity. This force depends on the weight of the drum and its contents. In order to compensate for this force and to prevent an undesirable lowering of the drum in the axial direction, the drum and the frame in which the drum is suspended may be provided with mutually repelling magnets which are fitted in such a way that the repelling force cancels the effect of the force of gravity. The magnets of the drum may be situated in a circle over the outer circumference of the drum, preferably at least near an end of the drum which is situated at a higher level than the opposite end of the drum, in which case the magnets on the frame may be situated on an opposite corresponding circle. If the device is provided with such magnets, this is another reason to suspend the drum in a concentric manner in the opening of the frame, in addition to limiting the deflection of the drum, so that the mutually opposite magnets are correctly aligned. With a device which is used in the peeling of vegetables, the axis of rotation of the drum normally encloses an angle of zero degrees with the horizontal, in other words the axis of rotation coincides with the horizontal.

The aspects described in this document will be explained below with reference to exemplary embodiments in combination with the figures. However, the invention is not limited to the exemplary embodiments described below. Rather, a number of variants and modifications are possible which also apply the inventive idea and thus fall within the scope of protection, as defined in the claims.

In particular, the option of combining the features/aspects which have only been mentioned in the description and/or have been shown in the figures with the features of the claims or features shown in other figures, insofar as compatible, is mentioned here.

In this case, reference is made to the following figures, in which:
Fig. 1 shows a diagrammatic front view of a first embodiment of the device;
Fig. 2 shows a diagrammatic side view of the first embodiment of the device;
Fig. 3 shows a diagrammatic front view of a second embodiment of the device.

In the figures, identical components are denoted by the same reference numerals.

By means of the vegetable-treating device 1; 101 illustrated in the figures which is provided with a drum 3; 103, it is possible to perform treatments of vegetables in the drum 3; 103, such as for example peeling, washing or drying of vegetables. With a device 1; 101 for peeling vegetables, the drum 3; 103 is provided with peeling elements (not shown). With a device 1: 101 for drying vegetables - a centrifuge - the drum 3; 103 is provided with perforations for discharging liquid from the drum 3; 103. With a device for washing vegetables, the drum 3; 103 is provided with nozzles for spraying liquid, in particular water, into the drum, and/or parts of the drum may then be provided with perforations for discharging the liquid and any dirt. The drum 3; 103 is rotatable about an axis of rotation in order to treat the vegetables in the drum 3; 103 by means of a rotating movement. The axis of rotation of the drum 3; 103 coincides with the centre axis of the drum 3: 103 which extends through the centre of the drum 3; 103.

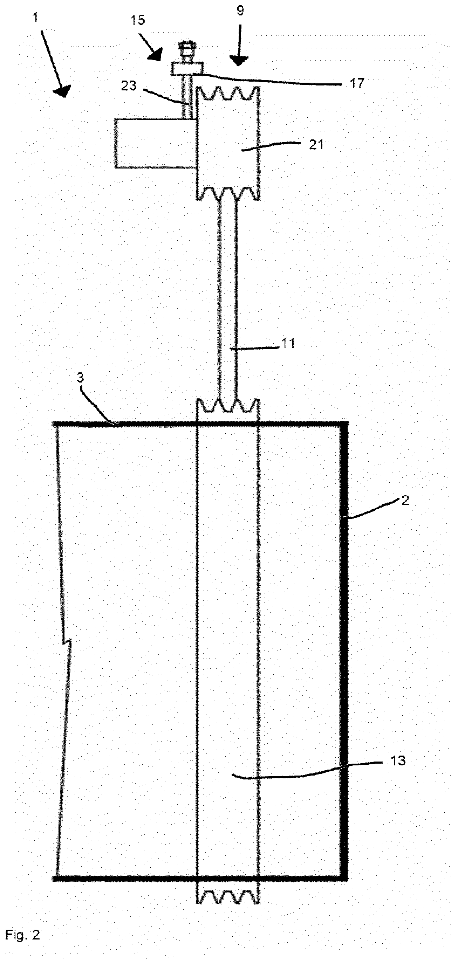

The drum 3; 103 of the device 1; 101 extends in an elongate manner between two drum ends 2 (fig. 2) and the device 1; 101 is provided with a stationary frame (not shown) which is largely situated around the drum. The drum 3; 103 has a cylindrical shape.

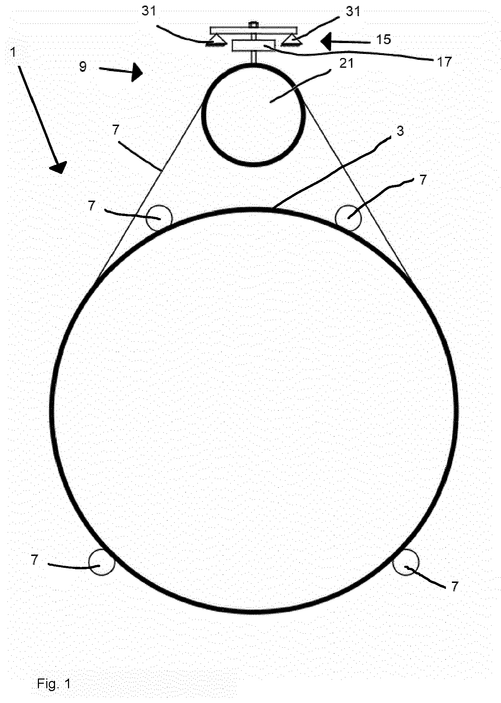

The device 1 is provided with a casing (not shown) which may be part of the stationary frame. The cylindrical casing largely surrounds the drum 3, with at least one part of the drum 3 protruding from the casing by the drum end 2, as shown in Fig. 2. The device 1 is furthermore provided with a bearing system, illustrated in Fig. 1 by bearing rollers 7, by means of which the drum 3 is rotatably attached in the stationary casing and is thus attached to the stationary frame. The at least one part of the drum 3 comprising the drum end 2 which protrudes from the casing is provided with a drive mechanism 9.

The drive mechanism 9 comprises a belt 11 which is partly fitted around the drum 3 for rotatably driving the drum 3. The drive mechanism 9 comprises a pulley 21 which can be rotatably driven by means of a motor (not shown) for rotatably driving the drum 3 by means of the belt 11. The belt 3 is a V-belt, with a ring 13 being provided around the outer circumference of the drum which is designed as is shown in Fig. 2 in order to receive the V-belt. Instead of the illustrated ring 13, other measures are possible to connect the drum 3 with the belt in order to be able to rotatably drive the drum 3. The drive mechanism 9 is provided with a tensioning mechanism 15 by means of which the belt tension of the belt 11 can be varied. The drive mechanism 9 is provided with a belt tension meter 17, such as for example a load cell. In the device 1, the belt tension meter 17 is provided in the tensioning mechanism 15 of the drive mechanism 9.

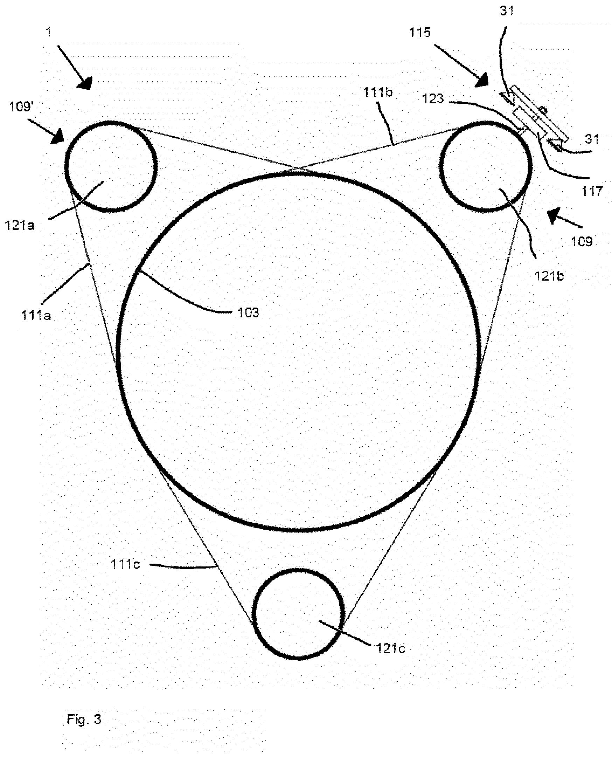

The device 101 shown in Fig. 3 likewise comprises a drive mechanism 109, that is to say the drive mechanism 109 is a drive and suspension mechanism 109. This drive and suspension mechanism 109 is provided with three belts 111a-c, preferably three V-belts, each belt 111a-c comprising a pulley 121a-c. At least one of the three belts 111a-c can be driven by means of the associated pulley 121a-c using a motor (not shown) for rotatably driving the drum 103. The drum 103 is provided on either side (not shown), near the drum ends, with the drive and suspension mechanism 109, i.e. device 101 comprises two identical drive and suspension mechanisms 109. It is conceivable for the second drive mechanism (not shown) of the device to be designed differently, for example like the drive mechanism 15 illustrated in Figs. 1 and 2, or for only one of the two virtually identical mechanisms 115 to be provided with a motor for rotatably driving the drum 103, so that the other of the two mechanisms is only a suspension mechanism without a dedicated drive. In such a suspension mechanism without a drive, a tensioning mechanism comprising a belt tension meter may also be provided to adjust the desired belt tension, for example in order to limit or reduce the risk of undesirable drum deflection. By means of the belts 111a-c, the drum 103 is floatingly suspended in an opening of the stationary frame (not shown). The opening (not shown) may be formed by a housing of the stationary frame which is situated at least largely around the drum. In this document, the term stationary frame is understood to refer to the components of the device that are not the drum and the drive and/or suspension mechanism of the drum. The symbols in Figs. 1 and 3 which are denoted by the reference numerals 31 represent the fixed surroundings.

The illustrated drive and suspension mechanism 109 is provided with a tensioning mechanism 115 by means of which the belt tension of the belt 111b can be varied, the at least one tensioning mechanism 115 being of a design identical to the tensioning mechanism 15 illustrated in Figs. 1 and 2, including the belt tension meter 117. The tensioning mechanism 15; 115 is provided with a pulley displacement member 23; 123, with which the belt tension in the belt 21; 121b can be varied by means of a displacement of the pulley 21; 121b, for example in the direction towards or away from the drum 3; 103, using the pulley displacement member 23; 123, the pulley displacement member 23; 123 being provided with the belt tension meter 17; 117. If desired, it is also possible to provide the belt tension meter in the pulley 21; 121a-c, so that a direct measurement of the belt tension by means of the belt tension meter is also possible, in addition to or instead of the indirect measurement of the belt tension discussed in this document. If desired, a direct measurement may for example also be performed by means of an actuator in the drive and/or suspension mechanism. The actuator may depress the belt in each case using a fixed/identical force, with the depression of the belt being measurable by means of the belt tension meter. This variable 'depression' will be reduced if the belt is more tensioned. In short, on the basis of the displacement measured by means of the belt tension meter, a relation with the belt tension can be established. Alternatively, the variable force may be measured in the actuator in order to depress the belt by a fixed predetermined degree, for example up to a fixed point, in which case the actuator is provided with the belt tension meter.

Although Fig. 3 only shows one tensioning mechanism 115, the device 101 may be provided with two or even three tensioning mechanisms 115 for the belts 111a, 111c. In addition, each tensioning mechanism 115 may be provided with a belt tension meter 117. As a correction of the belt tension of one of the belts 111a-c has a direct effect on the belt tension of the other belts, at least one belt tension meter 117 is required for a set of three belts 111a-c, which is preferably fitted on or in one of the two upper drive and/or suspension mechanisms 109, 109'. The two upper belts 111a, 111b will by definition always have the same tension, while the tension on the lower belt 111c which runs on the lowest pulley 121c will be lower due to the weight of the drum 103. Starting from a drum not containing any product, the difference in tension will always be equal. The same applies to the drive by means of a motor, that is to say one, two or all pulleys 121a-c of the drive and suspension mechanism 109 may be driven by means of a motor.

Using the belt tension meter 17; 117, the belt tension can be determined by measuring a variable which is correlatable with the belt tension in the tensioning mechanism 15; 115. A variation in the belt tension results in a change in the variable in the tensioning mechanism 15; 115 or the pulley which is correlatable with the belt tension of the belt 11, 111b. The belt tension meter 17; 117 performs an indirect belt tension measurement, which is constructionally relatively simple and therefore inexpensive to achieve, in order to thus determine the belt tension relatively accurately and subsequently adjust it to the correct/desired belt tension by means of the tensioning mechanism 15; 115. The tensioning mechanism 15; 115 is configured for automatically adjusting the belt tension to a desired belt tension by means of the tensioning mechanism 15; 115 on the basis of the actual belt tension measured indirectly by means of the belt tension meter 17; 117. To this end, the tensioning mechanism 15; 117 is provided with a control mechanism (not shown) which requires a single adjustment, for example in the factory or in situ where the device 1; 101 is installed, in order to process the variable in the tensioning mechanism 15; 115 which is correlatable with the belt tension by means of the belt tension meter 17; 117. The belt tension meter 17; 117 may also be provided on other components of the tensioning mechanism 15; 115, the only requirement being that a variation of the belt tension on or in the respective component results in a change in variable which is correlatable with the belt tension of the belt 11, 111b in the respective component. The belt tension meter may for example also be a torque meter or a strain gauge. In short, a belt tension meter by means of which the force, torque and/or deformation it measures is automatically transformed, in the drive and/or suspension mechanism, into an electrical signal which corresponds to a belt tension or belt tension variation in the belt.

As described in this document, a concentric arrangement of the drum 103 in an opening formed by the stationary frame is important. To this end, the device may be provided with a sensor mechanism, for example comprising two sensors, in particular ultrasonic sensors, to determine the concentric position of the drum in the opening. In order to measure the centring, it is sufficient to determine the distance in the radial direction between the drum 103 and the frame at each end of the drum 103 in two locations using a sensor. Such sensors may communicate with external or internal units, as described in this document. In a device (not shown) in which the axis of rotation of the drum encloses an angle with the horizontal which is greater than 0, for example between 5 and 60 degrees, the device may be provided with the magnets desclosed in this document.

## Claims

1. Device for treating vegetables (1, 101), wherein the device is provided with a drum (3, 103) rotatable about an axis of rotation in order to treat the vegetables in the drum by means of a rotating movement, and with at least one drive and/or suspension mechanism comprising at least one belt (11, 111b) which is at least partly fitted around the drum in order to drive the drum in a rotating manner and/or to suspend the drum, wherein the at least one drive and/or suspension mechanism is provided with at least one tensioning mechanism (15, 115) by means of which the belt tension of the at least one belt can be varied, **characterised in that** the at least one drive and/or suspension mechanism is provided with a belt tension meter (17, 117).

2. Device according to Claim 1, wherein the belt tension can be determined using the belt tension meter by measuring a variable in the drive and/or suspension mechanism which is correlatable with the belt tension.

3. Device according to Claim 1 or 2, wherein the belt tension meter comprises a torque meter, a load cell or a strain gauge.

4. Device according to one of the preceding claims, wherein the tensioning mechanism is configured to automatically adjust the belt tension to a desired belt tension on the basis of the actual belt tension measured by means of the belt tension meter.

5. Device according to one of the preceding claims, wherein the at least one tensioning mechanism is provided with the belt tension meter.

6. Device according to one of the preceding claims, wherein the drive and/or suspension mechanism is provided with a pulley, wherein the tensioning mechanism comprises a pulley displacement member, wherein the belt tension in the at least one belt can be varied by means of a displacement of the pulley using the pulley displacement member, wherein the pulley displacement member or the pulley is provided with the belt tension meter.

7. Device according to one of the preceding claims, wherein the drum extends in an elongate manner between two drum ends and the device is provided with a stationary casing which is largely situated around the drum as well as with a bearing system, by means of which the drum is rotatably attached in the stationary casing.

8. Device according to one of the preceding Claims 1-6, wherein the at least one drive and/or suspension mechanism is provided with two further belts, with each belt comprising a pulley, preferably at least one of the three belts can be driven by means of a motor.

9. Device according to Claim 8, wherein the device comprises at least one stationary frame in which the drum is suspended in an opening of the stationary frame by means of the at least one drive and/or suspension mechanism, preferably the opening is formed by a housing of the stationary frame which is at least largely situated around the drum.

10. Device according to Claim 8 or 9, wherein the device is provided with a sensor mechanism to determine the concentric position of the drum in the opening, preferably the sensor mechanism is an ultrasonic sensor mechanism.

11. Device according to Claim 10, wherein the sensor mechanism is communicatively connected to a display for displaying the concentric position of the drum in the opening.

12. Device according to Claim 10 or 11, wherein the sensor mechanism is communicatively connected to a controller for automatically adjusting the belt tension of the at least one belt, and thus the concentric position of the drum in the opening, by means of the tensioning mechanism.

13. Device according to one of the preceding claims, wherein the axis of rotation of the drum encloses an angle with the horizontal which is between 0 and 60 degrees.

14. Device according to Claim 9 and 13, wherein the drum and the frame in which the drum is suspended are each provided with mutually repelling magnets, wherein the magnets of the drum are preferably situated in a circle over the outer circumference of the drum, wherein the magnets on the frame are preferably situated on an opposite corresponding circle.

15. Use of a device according to one of the preceding claims for treating vegetables in the drum, such as for example peeling, washing or drying of vegetables.

## Patentansprüche

1. Vorrichtung zur Behandlung von Gemüse (1, 101), wobei die Vorrichtung mit einer um eine Drehachse drehbaren Trommel (3, 103), um das Gemüse in der Trommel mittels einer Drehbewegung zu behandeln, und mit mindestens einem Antriebs- und/oder Aufhängungsmechanismus versehen ist, der mindestens einen Riemen (11, 111b) umfasst, der zumindest teilweise um die Trommel herum angebracht ist, um die Trommel drehend anzutreiben und/oder um die Trommel aufzuhängen, wobei der mindestens eine Antriebs- und/oder Aufhängungsmechanismus mit mindestens einem Spannmechanismus (15, 115) versehen ist, mittels dessen die Riemenspannung des mindestens einen Riemens variiert werden kann, **dadurch gekennzeichnet, dass** der mindestens eine Antriebs- und/oder Aufhängungsmechanismus mit einem Riemenspannungsmesser (17, 117) versehen ist.

2. Vorrichtung nach Anspruch 1, wobei die Riemenspannung mithilfe des Riemenspannungsmessers bestimmt werden kann, indem eine Variable im Antriebs- und/oder Aufhängungsmechanismus gemessen wird, die mit der Riemenspannung korrelierbar ist.

3. Vorrichtung nach Anspruch 1 oder 2, wobei der Riemenspannungsmesser einen Drehmomentmesser, eine Wägezelle oder einen Dehnungsmessstreifen umfasst.

4. Vorrichtung nach einem der vorhergehenden Ansprüche, wobei der Spannmechanismus dazu ausgelegt ist, die Riemenspannung auf der Grundlage der mittels des Riemenspannungsmessers gemessenen tatsächlichen Riemenspannung automatisch auf eine gewünschte Riemenspannung einzustellen.

5. Vorrichtung nach einem der vorhergehenden Ansprüche, wobei der mindestens eine Spannmechanismus mit dem Riemenspannungsmesser versehen ist.

6. Vorrichtung nach einem der vorhergehenden Ansprüche, wobei der Antriebs- und/oder Aufhängungsmechanismus mit einer Riemenscheibe versehen ist, wobei der Spannmechanismus ein Riemenscheibenverschiebungselement umfasst, wobei die Riemenspannung in dem mindestens einen Riemen mittels einer Verschiebung der Riemenscheibe mithilfe des Riemenscheibenverschiebungselements variiert werden kann, wobei das Riemenscheibenverschiebungselement oder die Riemenscheibe mit dem Riemenspannungsmesser versehen ist.

7. Vorrichtung nach einem der vorhergehenden Ansprüche, wobei sich die Trommel langgestreckt zwischen zwei Trommelenden erstreckt und die Vorrichtung mit einem stationären Gehäuse, das weitgehend um die Trommel herum angeordnet ist, sowie mit einem Lagersystem versehen ist, mittels dessen die Trommel drehbar in dem stationären Gehäuse befestigt ist.

8. Vorrichtung nach einem der vorhergehenden Ansprüche 1-6, wobei der mindestens eine Antriebs- und/oder Aufhängungsmechanismus mit zwei weiteren Riemen versehen ist, wobei jeder Riemen eine Riemenscheibe umfasst, wobei vorzugsweise mindestens einer der drei Riemen mittels eines Motors angetrieben werden kann.

9. Vorrichtung nach Anspruch 8, wobei die Vorrichtung mindestens einen stationären Rahmen umfasst, in dem die Trommel in einer Öffnung des stationären Rahmens mittels des mindestens einen Antriebs- und/oder Aufhängungsmechanismus aufgehängt ist, wobei vorzugsweise die Öffnung durch ein Gehäuse des stationären Rahmens gebildet ist, das zumindest weitgehend um die Trommel herum angeordnet ist.

10. Vorrichtung nach Anspruch 8 oder 9, wobei die Vorrichtung mit einem Sensormechanismus versehen ist, um die konzentrische Position der Trommel in der Öffnung zu bestimmen, wobei vorzugsweise der Sensormechanismus ein Ultraschallsensormechanismus ist.

11. Vorrichtung nach Anspruch 10, wobei der Sensormechanismus kommunikativ mit einer Anzeige zum Anzeigen der konzentrischen Position der Trommel in der Öffnung verbunden ist.

12. Vorrichtung nach Anspruch 10 oder 11, wobei der Sensormechanismus kommunikativ mit einer Steuerung zum automatischen Einstellen der Riemenspannung des mindestens einen Riemens und damit der konzentrischen Position der Trommel in der Öffnung mittels des Spannmechanismus verbunden ist.

13. Vorrichtung nach einem der vorhergehenden Ansprüche, wobei die Drehachse der Trommel einen Winkel mit der Horizontalen umschließt, der zwischen 0 und 60 Grad beträgt.

14. Vorrichtung nach Anspruch 9 und 13, wobei die Trommel und der Rahmen, in dem die Trommel aufgehängt ist, jeweils mit einander abstoßenden Magneten versehen sind, wobei die Magnete der Trommel vorzugsweise in einem Kreis über dem äußeren Umfang der Trommel angeordnet sind, wobei die Magnete am Rahmen vorzugsweise auf einem gegenüberliegenden entsprechenden Kreis angeordnet sind.

15. Verwendung einer Vorrichtung nach einem der vorhergehenden Ansprüche zur Behandlung von Gemüse in der Trommel, wie z. B. Schälen, Waschen oder Trocknen von Gemüse.

## Revendications

1. Dispositif de traitement de légumes (1, 101), dans lequel le dispositif est pourvu d'un tambour (3, 103) rotatif autour d'un axe de rotation afin de traiter les légumes dans le tambour au moyen d'un mouvement de rotation, et d'au moins un mécanisme d'entraînement et/ou de suspension comprenant au moins une courroie (11, 111b) qui est au moins partiellement montée autour du tambour afin d'entraîner le tambour de manière rotative et/ou de suspendre le tambour, dans lequel l'au moins un mécanisme d'entraînement et/ou de suspension est pourvu d'au moins un mécanisme de tension (15, 115) au moyen duquel la tension de courroie de l'au moins une courroie peut être modifiée,
**caractérisé en ce que** l'au moins un mécanisme d'entraînement et/ou de suspension est pourvu d'un tensiomètre de courroie (17, 117).

2. Dispositif selon la revendication 1, dans lequel la tension de courroie peut être déterminée à l'aide du tensiomètre de courroie en mesurant une variable dans le mécanisme d'entraînement et/ou de suspension qui peut être corrélée à la tension de courroie.

3. Dispositif selon la revendication 1 ou 2, dans lequel le tensiomètre de courroie comprend un couplemètre, un capteur de pesage ou un extensomètre.

4. Dispositif selon l'une des revendications précédentes, dans lequel le mécanisme de tension est configuré pour ajuster automatiquement la tension de courroie à une tension de courroie souhaitée sur la base de la tension de courroie réelle mesurée au moyen du tensiomètre de courroie.

5. Dispositif selon l'une des revendications précédentes, dans lequel l'au moins un mécanisme de tension est pourvu du tensiomètre de courroie.

6. Dispositif selon l'une des revendications précédentes, dans lequel le mécanisme d'entraînement et/ou de suspension est pourvu d'une poulie, dans lequel le mécanisme de tension comprend un élément de déplacement de poulie, dans lequel la tension de courroie dans l'au moins une courroie peut être modifiée au moyen d'un déplacement de la poulie à l'aide de l'élément de déplacement de poulie, dans lequel l'élément de déplacement de poulie ou la poulie est pourvu(e) du tensiomètre de courroie.

7. Dispositif selon l'une des revendications précédentes, dans lequel le tambour s'étend de manière allongée entre deux extrémités de tambour et le dispositif est pourvu d'un boîtier fixe qui entoure largement le tambour ainsi que d'un système de palier, au moyen duquel le tambour est fixé en rotation dans le boîtier fixe.

8. Dispositif selon l'une des revendications précédentes 1 à 6, dans lequel l'au moins un mécanisme d'entraînement et/ou de suspension est pourvu de deux courroies supplémentaires, chaque courroie comprenant une poulie, de préférence au moins l'une des trois courroies peut être entraînée au moyen d'un moteur.

9. Dispositif selon la revendication 8, dans lequel le dispositif comprend au moins un cadre fixe dans lequel le tambour est suspendu dans une ouverture du cadre fixe au moyen de l'au moins un mécanisme d'entraînement et/ou de suspension, de préférence l'ouverture est formée par un boîtier du cadre fixe qui entoure au moins largement le tambour.

10. Dispositif selon la revendication 8 ou 9, dans lequel le dispositif est pourvu d'un mécanisme de capteur pour déterminer la position concentrique du tambour dans l'ouverture, de préférence le mécanisme de capteur est un mécanisme de capteur à ultrasons.

11. Dispositif selon la revendication 10, dans lequel le mécanisme de capteur est relié en communication à un dispositif d'affichage pour afficher la position concentrique du tambour dans l'ouverture.

12. Dispositif selon la revendication 10 ou 11, dans lequel le mécanisme de capteur est relié en communication à un dispositif de commande pour régler automatiquement la tension de courroie de l'au moins une courroie, et ainsi la position concentrique du tambour dans l'ouverture, au moyen du mécanisme de tension.

13. Dispositif selon l'une des revendications précédentes, dans lequel l'axe de rotation du tambour forme un angle avec l'horizontale qui est compris entre 0 et 60 degrés.

14. Dispositif selon les revendications 9 et 13, dans lequel le tambour et le cadre dans lequel le tambour est suspendu sont chacun pourvus d'aimants se repoussant mutuellement, dans lequel les aimants du tambour sont de préférence situés dans un cercle sur la circonférence extérieure du tambour, dans lequel les aimants sur le cadre sont de préférence situés sur un cercle correspondant opposé.

15. Utilisation d'un dispositif selon l'une des revendications précédentes pour traiter des légumes dans le tambour, comme par exemple l'épluchage, le lavage ou le séchage de légumes.
